(19) Europäisches Patentamt
European Patent Office
Office européen des brevets

(11) Publication number: 0 459 512 A2

(12) **EUROPEAN PATENT APPLICATION**

(21) Application number: 91108956.3

(51) Int. Cl.$^5$: **B01D 19/04**

(22) Date of filing: 31.05.91

(30) Priority: 01.06.90 US 531777

(43) Date of publication of application: 04.12.91 Bulletin 91/49

(84) Designated Contracting States: AT BE CH DE DK ES FR GB GR IT LI LU NL SE

(71) Applicant: UNION CARBIDE CHEMICALS AND PLASTICS COMPANY INC. (a New York corporation)
39 Old Ridgebury Road
Danbury Connecticut 06817-0001(US)

(72) Inventor: Kuo, An-Li
36 Turner Drive
Chappaqua, N.Y. 10514(US)

(74) Representative: Behrens, Dieter, Dr.-Ing. et al
Wuesthoff & Wuesthoff Patent- und Rechtsanwälte Schweigerstrasse 2
W-8000 München 90(DE)

(54) **Organosilicone antifoam composition.**

(57) A silicone oil based antifoam composition is prepared containing an organomodified silicone copolymer, a hydrophobic filler, and an emulsifier composition. The antifoam composition is readily emulsified in water, and is effective in defoaming aqueous film forming dispersions without producing surface defects in the dried film.

EP 0 459 512 A2

## FIELD OF THE INVENTION

The present invention is directed to an emulsifier system containing a sucrose fatty acid ester and a silicone, and to a silicone oil antifoam composition containing the emulsifier. More particularly, the invention relates to an improved organomodified silicone antifoam composition for use in aqueous film-forming paints, inks and coating compositions which exhibits good antifoaming properties with minimization of surface defects in the dried film.

## BACKGROUND OF THE INVENTION

Antifoam compositions containing organic oils are well known in the art. These antifoam compositions generally include a hydrocarbon carrier oil, such as mineral oil, or other organic oils such as vegetable oils or fatty acid ester oils. Hydrophobic solid particles are often included in the compositions to enhance the antifoaming properties. The organic oil based antifoam compositions have been shown to be only moderately effective in solutions having a high surface tension compared to some silicone oil antifoams. Organic foam control agents are generally not very durable, particularly in systems that are difficult to defoam such as those containing anionic surfactants. The organic foam control agents are generally considered to be forgiving in aqueous film forming dispersions in that they do not produce the significant surface defects, which are typically referred to as craters, pinholes, fish eyes and orange peel effects. The antifoaming properties of the organic foam control agents may be increased by the addition of hydrophobic particles such as silica. These foam control agents containing silica, while being slightly more effective, usually produce significant surface defects.

Other effective foam control agents have been produced from silicone oils, such as polydimethyl siloxanes. These silicone foam control agents are particularly effective when hydrophobic particles are dispersed in the oil. These silicone foam control agents are generally more effective than organic oil antifoams but have the distinct disadvantage of producing surface defects in film forming compositions.

Organomodified silicone oils and silicone and organic oil blends are generally very effective as emulsions in controlling foaming of aqueous compositions, although they usually result in surface defects of film forming compositions such as coatings, inks and textile dyes. Organomodified silicone oils can be effective foam control agents but produce surface defects when they are not emulsified properly.

One of the major problems encountered in using foam control agents has been the inability to introduce and emulsify the diluted foam control agent into the system because of the incompatibility with the film forming resin vehicle. The general trend is that the antifoam compositions that are more effective in foam control are more difficult to emulsify in aqueous film forming systems and result in the formation of surface defects. The antifoam compositions heretofor have generally not been emulsified sufficiently to inhibit the formation of surface defects in film forming compositions. The known emulsifying compositions are not able to adequately emulsify the silicone antifoams to avoid surface defects.

Many antifoam compositions have been developed which have been effective in controlling foam of some selected compositions. These antifoam compositions have, however, limited use in film forming compositions and in particular aqueous film forming dispersions due to the formation of surface defects. For example, U.S. Patent No. 4,514,319 discloses an antifoam composition which is based on a hydrocarbon carrier oil such as mineral oil, mineral spirits, kerosene or vegetable oil. The hydrocarbon carrier oil may also include from about 0 to 20% by weight of an optional silicone oil. A hydrophobic particulate filler and a silicone-glycol surfactant are also added to the antifoam composition to produce defoaming agents for ionic aqueous foaming solutions and for protein based solutions. This hydrocarbon oil based antifoam composition has the distinct disadvantage of experiencing poor compatibility with film forming resin vehicles and produces surface defects, such as craters, pinholes, fish eyes and orange peel effects. The surface defects in film forming compositions produced by the oil based antifoam composition are similar to the surface defects produced by conventional silicone oil based antifoam compositions.

Silicone-glycol copolymers have been used with some success in antifoam compositions. One example of this type of antifoam composition is disclosed in U.S. Patent No. 3,984,200. This reference relates to an antifoam composition specifically for use in carpet dyeing to reduce the occurrence of foaming of the dye and to reduce the flammability of the resulting carpet typically associated with the silicone-glycol antifoams in carpets. The antifoam composition is disclosed as comprising a hydrophilic silicone-glycol copolymer, a foam controlling agent from a liquid triorganosilyl end-blocked polydimethylsiloxane and a liquid hydroxyl end-blocked polydimethylsiloxane. The composition is prepared by mixing the components and diluting the mixtures in cold water. The siloxane-glycol composition is not considered suitable for use in film forming compositions.

Another example of antifoam compositions including silicone-glycol copolymers is disclosed in U.S. Patent No. 3,856,701. The antifoam composition contains up to about 20% of the silicone-glycol copolymer, a polypropylene glycol having a molecular weight of about 1000 to 2000, and a hydrophobic silica. The antifoam composition is disclosed as being suitable for use in polystyrene-butadiene latex and acrylonitrile-butadiene latex to reduce foaming. The reference reports no fish eye problems in the latex when cast in a 0.003 inch film.

U.S. Patent No. 3,984,347 discloses a foam controlling composition including a liquid polydimethylsiloxane foam controlling agent, a siloxane dispersing agent, silica and a base oil of siloxane glycol copolymers. The foam controlling composition is reported to be suitable for aqueous systems including synthetic rubber latex and styrene-butadiene emulsions. A similar foam controlling composition is disclosed in U.S. Patent No. 3,784,479. The composition may include a silicone oil base such as a polyoxypropylene polymer, polyoxypropylene-polyoxyethylene copolymer or siloxane glycol copolymers. The foam control agent is a polydimethylsiloxane. The dispersing agent is a siloxane polyoxypropylene copolymer or a siloxane polyoxypropylene-polyoxyethylene copolymer.

U.S. Patent No. 4,042,528 discloses a water soluble defoaming agent including an organopolysiloxane polyoxyalkylene copolymer, a polyoxyalkylene glycol copolymer and a nonionic surfactant. The disclosed surfactant includes a polyoxyalkylene modified compound, such as a polyoxyethylene sorbitan fatty acid ester. The defoaming agent is disclosed as being particularly suitable for use in dyeing polyester fibers.

U.S. Patent No. 4,028,218 relates to a defoaming composition including a non-silicone oil base and methylpolysiloxane-polyoxyalkylene mixed block copolymer. The oil component may be mineral oil, polypropylene oxide, polybutadiene, vegetable oil or animal oil. Silica or alumina is also included in the compositions to contribute to the defoaming action. A synergistic effect of the block copolymer, silica and the silicone-free oil is disclosed as being attributed to the defoaming effects.

The previously employed antifoam compositions which have an organomodified silicone oil base typically include organic blocks containing substantial amounts of ethyleneoxide which tends to make the copolymer more hydrophilic. It is, however, well known that antifoam compositions function best in systems in which they are insoluble or only sparingly soluble. The effectiveness of the antifoam compound without causing significant surface defects is believed to be due in part to the ability of the emulsifier system to effectively disperse the antifoam compound in aqueous systems. The emulsifier systems disclosed in the above references are not able to effectively disperse the antifoam compound to reduce surface defects in aqueous film forming dispersions. Some of the conventionally used antifoam compositions are able to reduce the foaming of aqueous film-forming dispersions, however are unacceptable due to the surface defects in the dried films. The hydrophilic character of some of the above-noted antifoam compositions have further limited their effectiveness in defoaming aqueous systems. There is accordingly a need for an effective emulsifier system and an antifoam composition which is readily dispersible in aqueous systems and is compatible with the film forming resins without producing surface defects, such as fish eye, craters, pinholes or orange peel effects.

## SUMMARY OF THE INVENTION

The present invention is directed to a novel emulsifier system which is able to effectively disperse a silicone antifoam compound in an aqueous dispersion. The invention is further directed to an antifoam composition containing the novel emulsifier suitable for use in aqueous film forming solutions or dispersions. The antifoam compositions in accordance with the invention are easily emulsified and exhibit improved effectiveness in inhibiting foaming and in substantially reducing the surface defects commonly caused by silicone oil and hydrocarbon oil based antifoams in aqueous film forming systems.

The antifoam composition of the invention is based on a silicone antifoam compound of an organomodified silicone and contains an effective amount of a novel emulsifier composition. The emulsifier composition includes an organic emulsifier of a sucrose carboxylic acid ester and an organomodified silicone emulsifier. The emulsifier composition has been found to be particularly effective in emulsifying silicone antifoams in aqueous compositions.

The emulsifier composition is a mixture including an organic emulsifier of a sucrose carboxylic acid ester having an HLB (Hydrophile-Lipophile Balance) of about 3 to about 13 and a silicone emulsifier of an organomodified silicone oil. The preferred organic emulsifier is a sucrose carboxylic acid ester having a degree of esterification of about 2. The carboxylic acid is preferably an alkanoic or alkenoic acid having about 4 to 22 carbon atoms and most preferably a fatty acid having 12 to 22 carbons. The HLB value as used herein refers to hydrophile-lipophile balance as is generally used in the art and discussed in Griffin, W.C., J. Soc. Cosmet. Chem. 1, 311 (1949). The HLB value characterizes the hydrophilic and hydrophobic

nature of the component.

The organomodified silicone emulsifier has the general formula:

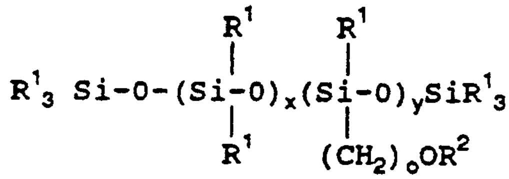

wherein $R^1$ is an alkyl and $R^2$ is a polyoxyethylene group terminated with a hydrogen or an alkyl group. Alternatively, $R^2$ is a polyoxyethylene/polyoxypropylene copolymer terminated with a hydrogen or an alkyl group, and x and y are such that the silicone emulsifier has an HLB of 3-13 and most preferably an HLB of 6 to 10. The silicone emulsifier may be a waxy solid or a liquid at room temperature. In the preferred embodiment o has a value of two to five. $R^1$ is preferably an alkyl having 1 to 4 carbons and the terminal alkyl group of $R^2$ has 1 to 4 carbon atoms. Preferably, the silicone emulsifier is at least partially dispersible in water.

The silicone antifoam is a substantially water insoluble organomodified silicone oil or waxy solid having the general formula selected from the group consisting of:

i)

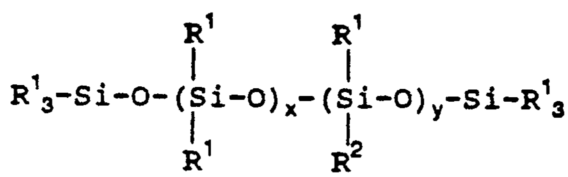

and, ii)

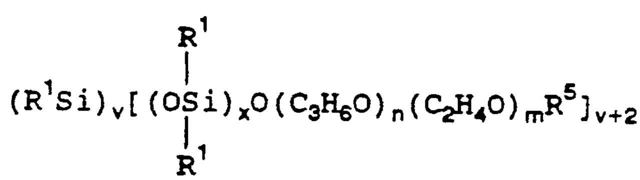

wherein $R^1$ is an alkyl, $R^2$ is selected from the group consisting of aryl, aralkyl, $-R^3O(C_3H_6O)_nR^4$, and $-R^3O-(C_3H_6O)_n(C_2H_4O)_mR^4$, wherein $R^3$ is an alkylene group of at least 2 carbons, $R^4$ is hydrogen or alkyl, y is an integer of at least 1, v is an integer of 0 to 4 and x, m and n are selected such that the silicone oil is substantially insoluble or only very slightly soluble in water at 25°C. In the preferred embodiment of the invention the silicone is a polyoxypropylene or polyoxyethylene/polyoxypropylene modified silicone. Preferably $R^1$ and $R^4$ are an alkyl group having 1 to 4 carbon atoms. The silicone may be a waxy solid at room temperature although the liquid silicone oils are generally preferred.

The antifoam composition will generally contain a particulate inorganic filler capable of enhancing the antifoaming effects, such as for example silica, fumed silica, precipitated silica, alumina, titania, perlite or clay material. The filler is preferably hydrophobized before adding to the silicone oil although the filler may be hydrophobized in situ. The inorganic filler may be dispersed in the antifoam silicone oil in the amount of 0% to about 20% by weight, preferably from 1% to about 5% by weight, and most preferably about 3% by weight. The particle size of the filler can be related to surface area as represented by BET of 60 to 325 $m^2$/gram. The BET is determined by the procedure reported in S. Brunauer, P.A. Emmet, E. Teller, J. Am. Chem. Soc., 60, 309 (1938).

The emulsifier composition is mixed with the antifoam compound in the amount of about 5% to about 80% by weight, preferably from about 10% to about 50% by weight and most preferably from 10% to about 20% by weight based on the total weight of the antifoam composition.

The antifoam compositions are prepared by admixing the emulsifier composition with the antifoam compound and uniformly mixing the components. In embodiments of the invention including an inorganic filler, the filler is preferably added to the organomodified silicone antifoam compound. The organomodified

silicone oil in the silicone antifoam composition serves as a carrier oil for the particulate filler. The filler is generally dispersed uniformly in the organomodified silicone oil before admixing the antifoam compound with the emulsifier composition. In the preferred embodiment the filler is a hydrophobic inorganic filler. A hydrophilic filler may alternatively be dispersed in the organomodified silicone oil antifoam and hydrophobized in situ before or after the emulsifier composition is admixed with the antifoam silicone oil.

The resultant antifoam composition may be used in the compound form without further treatment or dilution. Alternatively, the antifoam composition may be emulsified with water by gentle mixing or by using low shear equipment to produce an antifoam emulsion which is easily dispersed in aqueous film-forming compositions. The antifoam composition is easily emulsified with water and may be described as being self-emulsifiable.

The present invention is also directed to a process of defoaming aqueous film forming compositions using the antifoam composition or emulsions of the antifoam composition. The antifoam composition is particularly suitable for forming low concentration aqueous dispersions of the antifoam composition which can be added directly to the film forming composition. The antifoam composition is particularly effective in controlling the foaming properties of aqueous film forming compositions and reducing the occurrence of surface defects in the dried film.

## DETAILED DESCRIPTION OF THE INVENTION

The present invention provides a novel emulsifier composition which has been shown to be particularly effective in dispersing organic oils and silicones in aqueous systems. The invention is further directed to an antifoam composition containing the emulsifier which is easily emulsified with water and is particularly suitable for use in aqueous film forming compositions. The emulsifier composition is particularly effective in emulsifying silicone antifoams in film forming aqueous compositions. The antifoam composition in accordance with the invention is effective in substantially reducing the foaming characteristics of the aqueous film forming composition without affecting the quality or desirable film-forming characteristics of the composition. Aqueous film forming compositions containing the antifoam composition produce smooth and uniform films having no significant occurrences of craters, fish eyes, pinholes or orange peel effects.

More specifically, the invention is directed to a novel emulsifier composition which is particulary effective for use in an antifoam composition having an organomodified silicone antifoam agent base. The antifoam composition is a mixture of an antifoam compound and an emulsifier composition which is able to produce improved antifoam properties in the aqueous film forming composition without adversely affecting the film forming characteristics.

The emulsifier composition of the preferred embodiment includes a mixture of (1) an organic emulsifier of a carboxylic acid ester of sucrose and (2) an organomodified silicone oil emulsifier. The sucrose fatty acid ester preferably has a degree of esterification of about two and has an HLB of about 3 to about 13. The carboxylic acid is preferably an alkanoic or alkenoic acid having about 4 to 22 carbon atoms and most preferably a fatty acid having 12 to 22 carbon atoms. The organic emulsifier of the sucrose fatty acid ester will generally exist as a mixture of mono-, di-, tri- and poly esterified sucrose. The ester linkages will also generally be randomly formed with any of the hydroxyl groups on the sucrose, although some positions are more favored due to steric hindrance and relative reactivity of the hydroxyl group. In the preferred form, the sucrose ester will have an average of 2 fatty acid ester groups. In the preferred embodiment the sucrose carboxylic acid ester is a sucrose stearate such as that sold under the tradename Ryoto Sugar Ester S-770 by Mitsubishi International Corporation. This sucrose stearate has an HLB of about 7 and a degree of esterification of about 2.

The organomodified silicone oil of the emulsifier composition has the general formula

$$R^1_3SiO-(\overset{R^1}{\underset{R^1}{|}}\!\!\!\!SiO)_x(\overset{R^1}{\underset{(CH_2)_oOR^2}{|}}\!\!\!\!SiO)_ySiR^1_3$$

wherein $R^1$ is an alkyl group and $R^2$ is $(C_2H_4O)_mR^4$ or $(C_3H_6O)_n(C_2H_4O)_mR^4$, where o is an integer of two to five, $R^4$ is hydrogen or an alkyl group, y is an integer of at least 1 and wherein x, y, m and n are the same or different and selected such that the silicone is liquid at room temperature (about 25°C) and has an HLB

of about 3 to 13 and most preferably an HLB of 6-10. The organomodified silicone emulsifier has limited solubility or dispersibility in water and in the silicone antifoam oil. $R^1$ is preferably an alkyl having 1 to 4 carbons, and $R^4$ is an alkyl preferably having 1 to 4 carbons.

In a preferred embodiment of the invention, the organomodified silicone oil emulsifier of the emulsifier composition is

$$Me_3SiO-(SiMe_2O)_{20}-(\underset{\underset{(CH_2)_3O(C_2H_4O)_7CH_3}{|}}{MeSiO})_3-SiMe_3$$

Additional suitable organomodified silicone oil emulsifiers may include, for example,

$$Me_3SiO-(SiMe_2O)_{13}-(\underset{\underset{C_3H_6O(C_3H_6O)_{28}(C_2H_4O)_8H}{|}}{MeSiO})_5-SiMe_3$$

$$Me_3SiO-(SiMe_2O)_{37}-(\underset{\underset{C_3H_6O(C_2H_4O)_7CH_3}{|}}{MeSiO})_3-SiMe_3$$

The above organomodified silicone emulsifiers are prepared by standard procedures as well known in the art. For example, suitable processes are disclosed in U.S. Patent Nos. 2,834,748; 2,917,480 and 3,398,104.

The emulsifier composition of the invention is a particularly effective emulsifying agent and has been found to reduce surface defects in film forming dispersions typically caused by the antifoam and to improve the antifoam properties of most antifoam compounds, and in particular silicone oil compounds, compared to conventional emulsifiers used in antifoam compositions. Organomodified silicone antifoams, emulsified with the novel emulsifier composition have been found to be particularly effective in inhibiting surface defects in aqueous film forming dispersions.

The antifoam compound is an intimate mixture of an antifoam silicone and an optional inorganic, hydrophobic particulate filler. The antifoam silicones which have been found to be particularly suitable for reducing or preventing foaming of aqueous film forming dispersions are represented by the general formula

$$R^1_3Si-(\overset{\overset{R^1}{|}}{\underset{\underset{R^1}{|}}{OSi}})_x(\overset{\overset{R^1}{|}}{\underset{\underset{R^2}{|}}{OSi}})_yOSiR^1_3$$

wherein $R^1$ is an alkyl, $R^2$ is selected from the group consisting of aryl, aralkyl, $-R^3O(C_3H_6O)_nR^4$, and $-R^3O-(C_3H_6O)_n(C_2H_4O)_mR^4$, wherein $R^3$ is an alkylene having two or more carbons, $R^4$ is hydrogen or an alkyl group, y is an integer of at least 1 and x, y, m and n are the same or different and selected such that the silicone is a waxy solid or a liquid at room temperature. The values of x, y, m and n are further selected whereby the amount of ethyleneoxide is such that the silicone is insoluble or only very slightly dispersible in water at about 25°C or room temperature. Preferably the silicone is a polyoxypropylene, or polyoxyethylene/polyoxypropylene modified silicone. Preferably $R^1$ and $R^4$ are an alkyl having 1 to 4 carbon atoms. The antifoam silicone, in an alternative embodiment, may further be represented by the formula

$$(R^1Si)_v[(O\underset{R^1}{\overset{R^1}{Si}})_xO(C_3H_6O)_n(C_2H_4O)_mR^5]_{v+2}$$

wherein $R^1$, x, m and n are as above, and $R^5$ is an alkyl group and v is an integer from 0 to 4.

Particularly suitable antifoam silicones may include, for example, polydimethyl siloxanes and the polyoxypropylene silicones sold by Union Carbide Corporation. In the preferred embodiments of the invention the antifoam silicones are the polyoxypropylene silicones and most preferably

$$Me_3SiO-(SiMe_2O)_7(\underset{(CH_2)_3O(C_3H_6O)_{12}C_4H_9}{SiMe_4O})_3-SiMe_3$$

The antifoam silicone of the invention has the advantage of having a low surface tension necessary for antifoaming properties and being able to easily spread evenly over the surface of an aqueous film forming composition. The antifoam silicone should be selected such that the emulsifier compositon is readily dispersible therein. The antifoam silicone should also be able to decrease the surface tension of the aqueous film forming composition.

The antifoam silicone of the invention will generally serve as a carrier oil and include at least one hydrophobic inorganic particulate filler to promote the antifoam effects of the composition. The hydrophobic filler may be a conventionally prepared filler as used in the industry to enhance the antifoam properties of the antifoam composition. Suitable fillers include, for example, alumina, titania, silica, fumed silica, precipitated silica, perlite or clay materials. In the preferred embodiments, the filler is silica, fumed silica or precipitated silica having a surface area represented by BET of 60 to 325 $m^2$/gram and determined by the method reported in S. Brunauer, P.A. Emmet, E. Teller, J. Am. Chem. Soc., 60,309 (1938). Suitable fillers include, for example, hydrophobic precipitated silicas sold under the tradenames QUSO WR-55 and SIPERNAT D-10 by Degussa, hydrophilic precipitated silica sold under the tradename QUSO G-35 by Degussa, hydrophobic fumed silica sold under the tradename Tullanox 500 by Tulco Corporation and hydrophilic fumed silica Cabosil HS-5 by Cabot Corporation. The particle size of the filler is preferably in the range of about 0.1 to about 100 microns. It is most desirable to uniformly disperse the filler in the silicone carrier oil before admixing with the emulsifier system. The inorganic filler may be dispersed by conventional methods, such as by the use of high shear mixers.

Hydrophobic particulate inorganic fillers are well known in the art and may be prepared by a number of methods. In the preferred embodiment, the inorganic fillers are hydrophobized by a suitable treatment before dispersing in the silicone carrier oil. Alternatively, the inorganic filler may be hydrophobized *in situ* after dispersing in the antifoam silicone oil.

The surface of the inorganic filler is preferably made hydrophobic before incorporating into the antifoam composition by suitable hydrophobizing treatments such as, for example, reacting the filler with organic, silicone or organosilicone reagents having at least one of the groups selected from OH, $NH_2$, SH, NHR, $NR_2$, $NR_3$ and $NR_4$ which is able to react with the surface of the inorganic filler. The OH group may include the SiOH groups which are most often formed by hydrolysis of chlorosilanes. The suitable reagents may include, for example, disilazanes of silanes having alkyl groups containing one to eight carbon atoms, such as hexamethyldisilazine, octadecyltrichlorosilanes or trimethylchlorosilane. Other reagents may include primary, secondary, tertiary or quaternary alkyl or alkylether amines having eight to eighteen carbon atoms in the alkyl group.

The hydrophobic inorganic filler, such as from silica particles, may be prepared by tumbling the fine silica particles with a suitable hydrophobizing agent and a suitable amount of an organic solvent. The components are tumbled for a suitable length of time to form a substantially uniform mixture. The mixture is then heated to a moderated temperature in an oven for about two hours.

Alternatively the inorganic particulate filler may be hydrophobized *in situ*. For example, a hydrophilic silica, such as fumed silica HS-5, may be initially dispersed in the antifoam silicone oil. The dispersion is then heated at a moderate temperature for about two hours to activate the surface of the silica particles.

The temperature required for activation of the silica can be greatly reduced by including an effective amount of a basic catalyst to facilitate the reaction of the silica with a polydimethylsiloxane. The basic catalysts are suitably an alkali or alkaline earth metal hydroxide, and are included in the amount of about 0.1% to 5% by weight. The preferred basic catalysts are the alkali metal silanolates.

The hydrophobic, inorganic filler is included in the antifoam silicone oil compound in the amount of, for example, 0% up to about 20% by weight. Preferably the filler is included in the amount of 1% to about 5% by weight, and most preferably about 3%. The amount of the filler included may be adjusted as necessary to conform to the antifoaming requirements of the particular aqueous film forming composition.

The emulsifier system is combined with the antifoam silicone compound in an effective amount to disperse the antifoam silicone in the aqueous film forming composition to provide effective antifoam properties. The emulsifier system serves several important functions in the antifoam compositions. Most importantly, the emulsifier system enhances the ability of the antifoam silicone compound to spread over the surface of the foaming composition and to uniformly distribute the antifoam silicone for most effective use. The emulsifier system is further able to facilitate the emulsification of the antifoam composition in water whereby the composition can be diluted in the form of an aqueous dispersion before adding the film forming composition to be defoamed.

The proportions of the organic emulsifier to the organomodified silicone emulsifier in the emulsifier composition may be between 5% and about 95% by weight based on the total weight of emulsifier composition. Preferably, the organic emulsifier in the emulsifier composition is included in the amount of about 33% to 90% by weight and most preferably about 50% to about 67% by weight based on the total weight of the emulsifier composition.

The antifoam composition is prepared by mixing the emulsifier composition with the antifoam compound. The emulsifier composition is included in the amount of about 5% to about 80% by weight based on the total weight of the antifoam composition. Preferably the emulsifier composition is included in the amount of 10% to about 50% and most preferably from about 10% to about 20% by weight based on the total weight of the antifoam composition.

The antifoam composition consisting of the above components may be prepared by any suitable process. For example, the antifoam composition may be prepared by adding the inorganic hydrophobic filler to the organomodified silicone antifoam component. The hydrophobic filler is generally dispersed easily by low shear mixing. In the embodiments using a hydrophilic filler it is necessary to hydrophobize the filler before dispersing in the antifoam silicone oil component or in situ after dispersing in the silicone oil. This step may generally be carried out using a high shear mixer and a heat treatment.

The emulsifier composition is prepared by blending the organic emulsifier and the organomodified silicone oil emulsifier under low shear. The emulsifier composition is then blended with the antifoam compound and mixed under low shear until the components are uniformly dispersed. The mixture may be heated slightly, for example, to about 50° C to enhance mixing and dispersion of the components. Heating is, however, generally not necessary to effect proper mixing.

The antifoam composition as prepared above may be used directly in the neat form. The composition is in a 100% active form and does not require further processing or dilution in order to be added to the foaming composition. Alternatively, the antifoam composition may be initially emulsified in water using any conventional emulsifying technique. The antifoam composition of the invention is readily dispersible due to the emulsifier system contained therein. The inclusion of the emulsifier system in the antifoam composition enables the antifoam to be self-emulsifiable. The emulsion can be prepared containing any desired amount of the antifoam composition. Emulsions containing about 10% of the antifoam have been found to be particularly desirable for use in aqueous film forming compositions.

Antifoam compositions and emulsions prepared from the instant antifoam compositions have been found to be particularly suitable for use in aqueous film forming dispersions and particularly those containing ionic and non-ionic surfactants. The emulsifier system of the invention is able to effectively disperse the antifoam silicone and reduce the surface defects in the dried film compared to conventional emulsions. The polydimethyl siloxane antifoams combined with the emulsifier system have demonstrated effective antifoam properties with reduced surface defects in the dried film. The organomodified antifoam silicone oils combined with the emulsifier system have been found to be particularly effective as antifoams in film forming aqueous dispersions with minimal surface defects.

The following examples are intended to be exemplary of the preferred embodiments of the invention. All parts and percentages are intended to be by weight unless otherwise specified.

EXAMPLE 1

The example demonstrates the preparation of the antifoam composition in emulsion form. The composition of the samples are shown in Table 1 below and are identified as samples AF-A through AF-L inclusive. The samples were prepared by adding the organomodified antifoam silicone oil to a Cowel's Dissolver and combining the particulate silica in the amount of 3% by weight based on the weight of the total organomodified antifoam silicone oil and silica. The mixture was sheared at about 1,500 rpm for about 30 minutes at ambient conditions. When the silica was uniformly dispersed in the organomodified silicone carrier oil, the emulsifier composition was slowly added with continuous mixing. The emulsifier composition was initially prepared by blending the components as identified in Table 1. A standard laboratory mixer operating at about 900 rpm was used to mix the emulsifier composition with the antifoam silicone oil and silica. The mixture was heated to about 50°C to 55°C with continuous mixing for about 2 minutes to produce the self-emulsifiable antifoam compositions.

The antifoam compositions were then used to prepare a series of antifoam emulsions, which all contained 10% antifoam compound. The total amount of emulsifier was varied as shown in Table 1. The type and level of any added silica, relative to the weight of the organomodified silicone oil, is also indicated. The balance of the formula was water. A standard laboratory mixer, operating at about 900 rpm, was used to blend the components. The actives are intended to relate to the amount of the antifoam compound in the emulsion. The emulsions were prepared in 100 gram batches by adding the indicated amounts of the antifoam composition to the mixer. About 10 grams of water at 40°C was then added to the mixer at a rate of 1 ml/minute while continuously mixing. The batch temperature was maintained between about 40°C and 50°C during addition of the 10 ml of water. The heat was then removed and the remaining water was added over a period of about 5 to 10 minutes while continually mixing at about 400 rpm. The pH of the resultant emulsion was adjusted to pH 7 and post-mixed with a dispersion preservative for 5 minutes.

The antifoam emulsions prepared are shown in Table 1. Samples AF-B through AF-J represent samples of the antifoam composition containing the emulsifier system in accordance with the invention. Sample AF-I and AF-J represent antifoam compositions based on polydimethylsiloxane containing the emulsifier of the invention. Sample AF-A represents a comparative sample of previous antifoams and is provided for comparative purposes. The antifoam components used in this example, identified as silicone compounds X, XI and XII. The compound X is a liquid polyoxypropylene modified silicone oil having the general formula

$$Me_3SiO-(SiMe_2O)_7(SiMeO)_3SiMe_3$$
$$(CH_2)_3O(C_3H_6O)_{12}C_4H_9$$

Compound XI is a polydimethylsiloxane sold by Union Carbide Corporation under the tradename L-45/500. Compound XII an ethyleneoxide modified silicone of the general formula:

$$Me_3SiO(SiMe_2O)_{20}(SiMeO)_3SiMe_3$$
$$(CH_2)_3O(C_2H_4O)_7CH_3$$

The surface area of the silica is determined by the BET method as discussed in S. Brunauer, P.A. Emmet, E. Teller, J. Am. Chem. Soc., 60, 309 (1938).

**TABLE 1**

**10% ANTIFOAM EMULSIONS**

**ANTIFOAM COMPOUND**

| SAMPLE NO. | 10% ORGANOMODIFIED SILICONE OIL | FILLER | WT % FILLER | EMULSIFIER | WEIGHT % EMULSIFIER |
|---|---|---|---|---|---|
| AF-A | X[g] | - | 0 | SPAN/MYRJ[a] | 3 |
| AF-B | X | Silica[c] | 3% | S-770/XII[b] | 2 |
| AF-C | X | " | 3% | S-770/XII | 1 |
| AF-D | X | - | 0% | S-770/XII | 2 |
| AF-E | X | - | 0% | S-770/XII | 4 |
| AF-F | X | Silica[d] | 3% | S-770/XII | 2 |
| AF-G | X | Silica[e] | 3% | S-770/XII | 2 |
| AF-H | X | Silica[f] | 3% | S-770/XII | 2 |
| AF-I | XI[h] | Silica[d] | 10% | S-770/XII | 2 |
| AF-J | XI | Silica | 3% | S-770/XII | 2 |

(a) Span 60: MYRJ 52S 1.7:1.3
Span 60 is a sorbitane stearate and Myrj 52S is a stearic acid ester of polyethylene glycol from ICI Americas, Inc.
(b) S-770:XII = 2:1
S-770 is a sucrose stearate ester (HLB=7) from Mitsubishi Chemical Co.
(c) hydrophobic precipitated silica, WR-55 by Degussa, BET=110m$^2$/g
(d) hydrophilic precipitated silica, G-35 by Degussa, BET=180m$^2$/g
(e) hydrophilic fumed silica, HS-5 by Cabot, BET=325m$^2$/g
(f) hydrophobic precipitated silica, Sipernat D-10 by Degussa, BET=90m$^2$/g
(g) polyoxypropylene modified silicone
(h) polydimethylsiloxane, 500 cp

EXAMPLE 2

This example evaluates the antifoam performance of the antifoam emulsions as prepared in Example 1. The tests were carried out using a water based ink formulation vehicle sold under the tradenames Joncryl 1679 and Joncryl 678 by S. C. & Johnson, Inc. The antifoaming ability of each sample was examined by preparing a control sample of Joncryl 1679 and diluting the sample 1:1 with water to form an aqueous dispersion. The dispersion was shaken for about 10 seconds and the amount of foam was observed. Identical samples were prepared containing the antifoam emulsions prepared in Example 1 in the amounts indicated in Table 2A. The reduction in foam produced is shown. As can be seen, the samples AF-F of the invention substantially reduced foam production compared to sample AF-A.

The samples were then subjected a standard draw down test by dispersing the antifoam emulsion in the Joncryl 1679 in a laboratory mixer for 10 minutes. Approximately 2 ml of each dispersion sample was poured onto an ink drawndown chart (Form 3NT-3) from Leneta Paper Co. and spread using a No. 6 Myer Rod. The dispersion was spread by placing the rod in the dispersion on the paper and drawing the rod across the paper to cover about 50% to 75% of the paper. The resultant film was allowed to dry and examined for the presence of craters and fisheyes the observations are recorded in Table 2A. The results show little or no surface defects from sample AF-F and substantial defects from sample AF-I although it was considerably more effective in reducing the foam.

The antifoam characteristics were then examined on $NH_3$ neutralized Joncryl 678 ink formulation vehicle with and without isopropyl alcohol. A comparison sample (comparison I) of the ink formulation vehicle with an antifoam sold by Ross Chem. Inc. under the tradename Foam Blast 320 CT was mixed at high speed using a laboratory mixer for 5 minutes. Similar samples of the ink formulation vehicle were produced containing antifoam emulsions AF-B and AF-G. The samples were then mixed at high speed for 5 minutes and the foam volume recorded. The results of the foam volume of the test samples shown in Table 2B indicate a substantial reduction in the volume of foam produced in the samples containing the antifoam emulsions.

TABLE 2A

ANTIFOAM PERFORMANCE IN JONCRYL 1679

| SAMPLE | CONC** | ANTIFOAM ACTIVES (PPM) | % FOAM REDUCTION | CRATER |
|---|---|---|---|---|
| AF-F | 0.2 | 200 | 50 | None/Trace |
| AF-F | 0.2 | 200 | 54 | None/Trace |
| AF-A | 0.2 | 600 | 4 | Trace |
| AF-I | 0.2 | 200 | 89 | Substantial |

TABLE 2B

ANTIFOAM PERFORMANCE IN JONCRYL 678

| SAMPLE | CONC** (%) | FOAM VOLUME (ML) W/O IPA | FOAM VOLUME (ML) W/IPA | Crater |
|---|---|---|---|---|
| COMPARISON I | 1.0 | 70 | 7 | Substantial |
| | 0.5 | 100+*** | --- | " |
| | 0.125 | --- | 28 | " |
| AF B | 1 | 33 | 4.7 | none |
| | 0.125 | 75 | --- | " |
| | 0.062 | --- | 10.5 | " |
| AF G | 1 | 37 | 3.5 | none |
| | 0.125 | 75 | --- | " |
| | 0.062 | --- | 9.3 | " |

** concentration by weight is as received from the manufacturer

*** over 100 mls of foam was generated in 4 minutes

EXAMPLE 3

The antifoam performance of various antifoam emulsions as prepared in Example 1 were examined in a water based ink formulation sold by BASF Corp. The samples were subjected to the shake text and draw down test as in Example 2 and the foam production and surface defects recorded in Table 3. The results show the antifoam emulsion of the invention exhibited no surface foam and no surface defects. In contrast, the comparative samples AF-A, AF-I and AF-J showed substantial surface defects in the film.

In this example Compound 1 and Compound 3 are the organomodified silicone Compound X as defined above containing 3% silica WR-55 and G-35, respectively, without the emulsifier system of the invention. The Comparison I sample was a commercially available antifoam sold under the tradename FOAM BLAST 320 CT by Ross Chem., Inc. and Comparison IV is an organic antifoam sold under the tradename COLLOID 999 by Colloid, Inc. FOAM BLAST 320 CT is a blend of silica, polydimethylsiloxane oil, aliphatic hydrocarbon and polyether. These samples containing no emulsifier system showed substantial surface defects compared to the antifoam emulsions of the invention although they were effective in reducing foam.

TABLE 3

ANTIFOAM PERFORMANCE IN INK[b]
AT 1% CONCENTRATION

| SAMPLE | FOAM COLLAPSE TIME (SEC) | SURFACE FOAM | FISHEYE |
|---|---|---|---|
| AF B | < 1 | NONE | none |
| CMPD 1 | < 1 | NONE | substantial |
| AF B | 5 | NONE | none |
| AF A | < 1 | NONE | moderate |
| CMPD 3 | 10 | NONE | trace |
| AF E | 25-30 | NONE | none |
| AF F | 25 | NONE | none |
| AF B | 5 | NONE | none |
| AF I | 0 | NONE | moderate |
| AF J | 0 | NONE | moderate |
| COMPARISON IV | a | Light | trace |
| COMPARISON I | 1 | NONE | substantial |

-------------------------

Note: All emulsions were prepared by the lab mixer.

a. Foam does not collapse to 0 foam volume; small volume of foam persists on the surface.

b. By BASF Corp.

EXAMPLE 4

This example demonstrates the effects of the antifoam concentration on the surface film forming properties, thus the forgiving nature of the inventive composition. The film forming component was a water based ink sold by BASF INC. The samples were prepared by dispersing the antifoam emulsion of Example 1 in the ink as in Example 2. Comparison samples I and IV were also prepared by dispersing the antifoam in the ink. The amounts of the antifoam included and the observed surface defects are shown in Table 4. The results show no surface defects of the samples compared with the control comparison samples which showed substantial surface defects.

TABLE 4

EFFECTS OF ANTIFOAM CONCENTRATION ON SURFACE FILM FORMATION IN INK[a]

| SAMPLE | ANTIFOAM SAMPLE CONCENTRATION (AS-REC) (WT%) | SURFACE DEFECTS |
|---|---|---|
| AF B | 1 | NONE |
| AF B | 5 | NONE |
| AF B | 10 | NONE |
| AF G | 10 | NONE |
| AF E | 5 | NONE |
| COMPARISON IV | 5 | YES; moderate/substantial |
| COMPARISON I | 1 | YES; substantial |

[a]By BASF Corp.

EXAMPLE 5

This example demonstrates the durability of the antifoam emulsions of the invention in an alkaline environment. The samples were prepared using an ink formulation vehicle sold under the tradename Joncryl 1679 using the procedure of Example 2. Samples AF-E and AF-F prepared as in Example 1. Comparison II was an organic antifoam sold under the tradename BAYLAB BUBBLE BREAKER 748 by Witco. Comparison III is an organic antifoam sold under the tradename Nalco 2343 by Nalco Chemical Company.

The foam tests were prepared by forming a dispersion of a 1:1 blend of Joncryl 1679 and water. The antifoam was added to the dispersion and shaken for one minute. The foam volume was recorded after 15 seconds. Three consecutive shake tests were performed and the values averaged. The averaged values are recorded in Table 5. Identical shake tests were conducted at 1 week, 2 weeks and 1 month.

TABLE 5

FOAM CONTROL AND SURFACE APPEARANCE[1]

| SAMPLE | ANTIFOAM ACTIVES (PPM) | PERCENT FOAM REDUCTION @ AMBIENT INITIAL | 1 WK | 2 WK | 1 MO |
|---|---|---|---|---|---|
| AF E | 200 | 54 | 41 | 32 | 18 |
| AF F | 200 | 45 | 41 | 32 | 18 |
| COMPARISON II | 2000 | 32 | 9 | 9 | 5 |
| COMPARISON IV | 2000 | 41 | 18 | 14 | 5 |
| COMPARISON III | 2000 | 14 | 9 | 9 | 9 |

| SAMPLE | CRATERING/FISHEYE/HAZE INITIAL | 1 WK | 1 MO |
|---|---|---|---|
| AF E | NONE/TRACE | NONE/TRACE | NONE/TRACE |
| AF F | NONE/TRACE | NONE/TRACE | NONE/TRACE |
| COMPARISON II | NONE/TRACE SLIGHT HAZE | NONE/TRACE | NONE/TRACE |
| COMPARISON IV | NONE/TRACE SLIGHT HAZE | NONE/TRACE | NONE/TRACE |
| COMPARISON III | NONE/TRACE SLIGHT HAZE | NONE/TRACE | NONE/TRACE |

1. COATED ON 3-NT-3 PRINTING INK PAPER (LENETA COMPANY) COMPARED WITH JONCRYL 1679 (CONTROL), AS RECEIVED AND IN WATER (1:1).

As can be seen by the data of Table 5 the antifoam compositions containing the emulsifier of the invention retained their antifoaming ability considerably longer than the control samples without the emulsifier and exhibit no cratering effect. Although the comparative samples showed only small amounts of cratering effects, their antifoaming properties were comparatively inferior.

EXAMPLE 6

This example evaluates the antifoam properties of the antifoam composition in an acrylic latex used in paints.

To a 4 ounce, wide mouth jar was added a sample of UCAR 516 latex sold by UCAR Emulsion Systems, Cary, N.C. and a sample of antifoam composition AF-B of Example 1 in the amounts shown in Table 6. The UCAR 516 latex contained about 56% acrylic latex solids. The jar was tightly closed and placed in a three prong adjustable clamp attached to a Model No. 75 Burrell Shaker. The clamp was adjusted such that the jar was vertical and the height of liquid was measured.

The jar was then shaken at the maximum setting for 10 minutes. The jar was immediately returned to the vertical position and the measurements of the total height of the liquid and foam were recorded at 15 seconds, 30 seconds and 1 minute. The results are shown in Table 6.

Similar samples were prepared using antifoam composition AF-A, AF-I and a polydimethylsiloxane

silicone emulsion sold under the tradename LE-45 by Union Carbide Corp. A control sample containing no antifoam was also prepared. The amount of AF-A was added at about one-third the weight of AF-B since it has three times more antifoam actives than AF-B. Each sample was subjected to the shake test and the results recorded in Table 6.

TABLE 6

| SAMPLE | WT. OF UCAR 516 LATEX | ANTIFOAM COMPOSITION | WT. OF ANTIFOAM COMPOSITION | WEIGHT PERCENT ANTIFOAM | ANTIFOAM ACTIVES (PPM) | TOTAL HEIGHT(1) (MILLIMETERS) 15 SECONDS | PERCENT FOAM REDUCTION AT 15 SECONDS | AVERAGE(2) PARTICLE SIZE |
|---|---|---|---|---|---|---|---|---|
| 1 (control) | 50.0 | - | - | 0 | 0 | 46 | --- | --- |
| 2 | 49.75 | AF-B | 0.25 | 0.50 | 500 | 32 | 93 | 3.0 |
| 3 | 49.91 | AF-A | 0.085 | 0.165 | 500 | 32 | 93 | (14.0)[3] |
| 4 | 49.75 | AF-I | 0.25 | 0.50 | 500 | 32 | 93 | 13.8 |
| 5 | 49.75 | LE-45(10%) | 0.25 | 0.50 | 500 | 41 | 33 | (3.0)[3] |

1. Liquid height before shaking is 31 millimeters, total heights at 30 and 60 second data points are identical to 15 second data point shown in table.
2. Average particle size of antifoam is microns.
3. Estimated

The above data of Table 6 demonstrate that latex emulsions containing antifoam compositions AF-A, AF-I and AF-B provide efficient foam control at approximately the same actives level of 500 ppm, even though the particle size of AF-B is considerably smaller than AF-A or AF-I. The antifoam sample LE-45-(10%) has a particle size approximately that of the AF-B although antifoam activity was notably inferior. The antifoam activity of AF-B is shown to be substantial, notwithstanding the small particle size.

The effect of the antifoam on the surface defects of the above samples was then examined. From each of the samples, about 3 mm of the UCAR 516 latex/antifoam blend was poured into a 10 ml graduated cylinder with a pouring spout. Approximately 10 ml of the blend was poured onto an opacity chart (form 2c Leneta Co.) and a draw down test was made with a 10 ml coater bar to cover about 50% to 75% of the chart. The coating was allowed to dry and then visually examined for the presence of craters and fish eyes.

As shown in Table 7 the sample containing AF-B and the sample containing LE-45 (10%) do not cause cratering. Since the sample containing LE-45 (10%) experienced marginal antifoam properties, the AF-B is considered to be the superior antifoam. The samples containing AF-A and AF-I exhibited good antifoam properties but exhibit severe surface imperfections, and are therefore not considered suitable antifoams for film forming compositions.

TABLE 7

| SAMPLE | ANTIFOAM COMPOUNDS | WEIGHT PERCENT BY ANTIFOAM | ANTIFOAM ACTIVES (PPM) | CRATERING/ FISHEYEING | ANTIFOAM AVERAGE PARTICLE SIZE (MICRONS) |
|---|---|---|---|---|---|
| 1 | - | 0 | 0 | NONE | --- |
| 2 | AF-B | 0.50 | 500 | NONE | 3.0 |
| 3 | AF-A | 0.165 | 500 | YES | (14.0)* |
| 4 | AF-I | 0.50 | 500 | YES | 13.8 |
| 5 | LE-45(10%) | 0.50 | 500 | NONE | (3.0)* |

*Average Particle Size ( ) = estimated

EXAMPLE 7

This example considers the antifoam properties and the anticratering properties of the antifoam compositions in a floor polish. The samples were prepared from a floor polish sold under the tradename N-04-4 from Rohm and Haas Corp., Philadelphia, PA. The floor polish as received contained no antifoam for foam control.

The samples were prepared by adding 24.9 grams of the floor polish to a jar and mixing with 0.05 g of the antifoam composition as indicated in Table 8. The foam composition was diluted to 1% actives prior to adding to the polish. The mixture was dispersed by stirring with a metal spatula, and stored over night. The prepared samples are identified in Table 8. All indicated weights are in grams.

The antifoam properties and anticratering properties of the antifoam compositions in the floor polished were evaluated by applying the samples to a piece of black vinyl floor tile. The tile was a 12 by 12 inch vinyl tile from Chemical Specialties Manufacturing Association of Washington, D.C. which had been thoroughly cleaned to remove any dirt, oil or plasticizer. The tile was sectioned into four 6 by 6 inch squares. About 2 ml of the sample 7 containing the AF-B antifoam was poured onto one square of the tile and spread using a 1 by 1 inch sterile cloth pad. The sample was spread by an upward and downward movement followed by a sideways movement and then concluding with an upward and downward movement. Visual inspection of the sample was made to detect if the film opened up during application to form craters or fish eyes.

Immediately after the sample was applied, the pad was patted in the remaining 6 by 6 squares. The pad was patted in five rows of five pats each. The tiles were then allowed to air dry.

The number of dried white bubbles was determined as a measure of the foam control properties of the samples. The greater number of the dried bubbles, which appeared as white crust-like craters, indicated the poor foam control properties.

The above process was repeated for each sample containing the antifoam compositions and the control sample containing no added antifoam. The results are shown in Table 8.

**TABLE 8**

| SAMPLE NUMBER | WT. OF FLOOR POLISH N-04-4 | ANTIFOAM EMULSION[4] | WT. OF ANTIFOAM EMULSION | WEIGHT PERCENT OF ANTIFOAM | ANTIFOAM ACTIVES (PPM)[1] | FOAM CONTROL RATING[2] | CRATERING/ FISHEYEING | ANTIFOAM PARTICLE SIZE (MICRONS)[3] |
|---|---|---|---|---|---|---|---|---|
| 6 | 25.0 | - | - | --- | --- | POOR (198) | NONE | --- |
| 7 | 24.9 | AF-B | 0.05 | 0.20 | 20 | VERY GOOD (11) | NONE | 3.0 |
| 8 | 24.9 | AF-I | 0.05 | 0.20 | 20 | GOOD (47) | YES | 13.8 |
| 9 | 24.9 | AF-A | 0.05 | 0.20 | 20 | POOR (144) | NONE | (14.0) |
| 10 | 24.9 | LE-45 | 0.05 | 0.20 | 20 | FAIR (85) | NONE | (3.0) |

[1] PPM = Parts per Million

[2] ( ) = Number of White Dried Foam Bubbles:P
0-10 = Excellent
11-25 = Very Good
26-50 = Good
51-100 = Fair
100 = Poor

[3] Average Particle Size
( ) = estimated

[4] All emulsions at 1% actives.

The results shown in Table 8 indicate the floor polish sample 6 containing AF-B antifoam composition had good foam control without causing the floor polish to produce craters or fish eyes compared to the other samples.

The above example examples are intended to be exemplary of the preferred embodiments of the invention. They are not intended to be limit the scope of the invention. Numerous alternative embodiments

will be apparent to one skilled in the art.

## Claims

1. A silicone oil based antifoam composition comprising:
   a. from about 20% to about 95% by weight of an antifoam organomodified silicone selected from the group consisting of:

i)

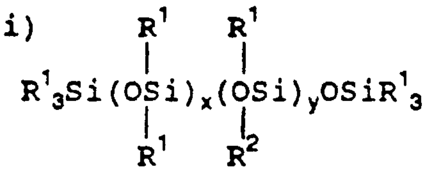

and, ii)

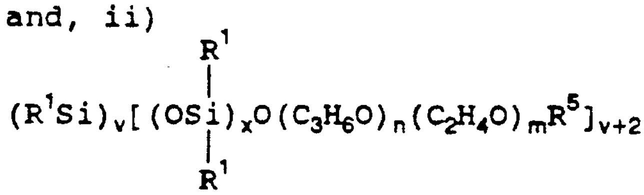

wherein $R^1$ is an alkyl group; $R^2$ is selected from the group consisting of: aryl, aralkyl, $-R^3O(C_3H_6O)_nR^4$, $-R^3O(C_3H_6O)_n(C_2H_4O)_mR^4$, wherein $R^3$ is an alkylene of at least 2 carbons, $R^4$ is hydrogen or an alkyl group, $R^5$ is an alkyl group, y is an integer of at least 1, v is an integer from 0 to 4, x, y, m and n are the same or different and selected such that the antifoam organomodified silicone is substantially insoluble or very slightly soluble in water at about 25° C; and
   b. an emulsifier composition in the amount of about 5% to about 80% by weight based on the total weight of the antifoam composition, wherein said emulsifier composition includes about 5% to 95% by weight of a sucrose carboxylic acid ester having a degree of esterification of about 2 and an HLB of about 3 to 13; and about 5% to 95% of an organomodified silicone emulsifier having the formula

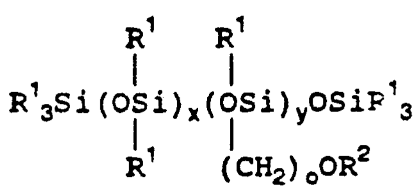

wherein $R^1$ is an alkyl and $R^2$ is $(C_2H_4O)_mR^4$ or $(C_3H_6O)_n(C_2H_4O)_mR^4$, where o is an integer from two to five, $R^4$ is hydrogen or an alkyl group, y is an integer of at least 1, and wherein x, y, m and n are the same or different and selected such that the silicone emulsifier has limited solubility in water.

2. The antifoam composition of claim 1 further including from about 0 to 20% by weight of a hydrophobic inorganic particulate filler based on the weight of the antifoam organomodified silicone, wherein the inorganic filler is selected from the group consisting of hydrophobic silica, fumed silica, precipitated silica, titania, alumina, perlite and clay.

3. The antifoam composition of claim 1 wherein the sucrose carboxylic acid ester is included in the amount of about 33% to 90% by weight based on the total weight of the emulsifier composition.

4. The antifoam composition of claim 3 wherein the sucrose carboxylic acid ester is included in the amount of 50% to 67% by weight based on the total weight of the emulsifier composition.

5. The antifoam composition of claim 1 wherein $R^1$ and $R^4$ of the antifoam organomodified silicone are the same or different and are an alkyl of 1 to 4 carbons.

6. The antifoam composition of claim 1 wherein $R^1$ and $R^4$ of the organomodified silicone emulsifier are the same or different and are an alkyl having 1 to 4 carbon atoms.

7. The antifoam composition of claim 1 wherein the emulsifier composition is present in the amount of about 10% to 50% based on the total weight of the antifoam composition.

8. The antifoam composition of claim 1 wherein the emulsifier composition is present in the amount of about 10% to 20% based on the total weight of the antifoam composition.

9. The antifoam composition of claim 1 wherein the sucrose carboxylic acid ester is an ester of a fatty acid having 4 to 22 carbon atoms.

10. The antifoam composition of claim 1 wherein the sucrose carboxylic acid ester is sucrose stearate.

11. The antifoam composition of claim 1 further including an effective amount of water to form an antifoam emulsion.

12. A process of inhibiting foaming of an aqueous dispersion comprising adding to the aqueous dispersion an effective amount of an antifoam composition, wherein the antifoam composition comprises;
a. from about 20% to about 95% by weight of an antifoam organomodified silicone selected from the group consisting of

i) 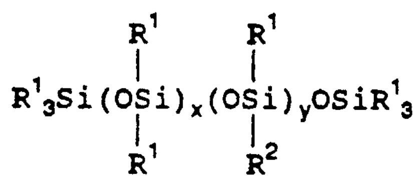

and, ii)

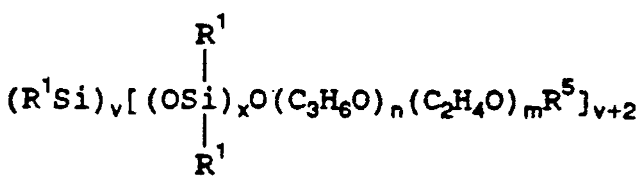

wherein $R^1$ is an alkyl group; $R^2$ is selected from the group consisting of aryl, aralkyl, $-R^3O(C_3H_6O)_nR^4$, $-R^3O(C_3H_6O)_n(C_2H_4O)_mR^4$, wherein $R^3$ is an alkylene of at least 2 carbons, $R^4$ is hydrogen or alkyl group, $R^5$ is an alkyl group, y is an integer of at least 1, v is an integer from O to 4, and x, y, m and n are selected such that the antifoam organomodified silicone is substantially insoluble or very slightly soluble in water at about 25 ° C; and
b. an emulsifier composition in the amount of about 5% to about 80% by weight based on the total weight of the antifoam composition, wherein said emulsifier composition includes about 5% to 95% weight of a sucrose fatty acid ester having a degree of esterification of about 2 and having an HLB of about 3 to 13, and about 5% to about 95% by weight of an organomodified silicone emulsifier having the formula

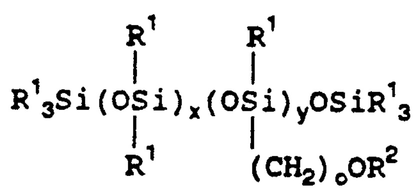

wherein $R^1$ is an alkyl and $R^2$ is $(C_2H_4O)_zR^4$ or $(C_3H_6O)_n(C_2H_4O)_mR^4$, wherein o is an integer from 2 to 5, $R^4$ is hydrogen or an alkyl group, y is an integer of at least 1, and wherein x, y, m and n are

the same or different and selected such that the silicone emulsifier has limited solubility in water.

**13.** The process of claim 12 wherein the foamed aqueous dispersion is a film forming dispersion.

**14.** The process of claim 12 wherein the antifoam organomodified silicone is liquid at room temperature.

**15.** The process of claim 12 wherein the antifoam organomodified silicone includes about 0 to 20% by weight of an inorganic filler selected from the group consisting of hydrophobic silica, fumed silica, precipitated silica titania, alumina, perlite and clay.

**16.** The process of claim 12 wherein the sucrose ester is included in the amount of about 33% to 90% by weight based on the total weight of the emulsifier composition.

**17.** The process of claim 12 wherein the sucrose ester is included in the amount of about 50% to 67% by weight based on the total weight of the emulsifier composition.

**18.** The process of claim 12 wherein the emulsifier composition is included in the amount of about 10% to 50% based on the total weight of the antifoam composition.

**19.** The process of claim 12 wherein the emulsifier composition is included in the amount of about 10% to 20% by weight based on the total weight of the antifoam composition.

**20.** The process of claim 12 wherein the sucrose ester is an ester of an alkyl or alkylene carboxylic acid having 4 to 22 carbons.

**21.** The process of claim 12 wherein the sucrose ester is sucrose stearate.